# EUROPEAN PATENT APPLICATION

(11) **EP 4 744 977 A1**
(43) Date of publication of application: **20.05.2026**
(21) Application number: 24860114.8
(22) Date of filing: 25.06.2024
(51) Int. Cl.: B60S 1/48, B60S 1/50

(54) **WASHER PUMP MODULE**

(30) Priority: 28.08.2023 KR 20230112638
(71) Applicant: SL Corporation, Daegu 41514 (KR)
(72) Inventor: CHA, Hong Jun, Daegu 41003 (KR); BAE, Seong Guk, Daegu 41124 (KR)
(74) Representative: BCKIP Part mbB
(86) International application number: PCT/KR2024/008783
(87) International publication number: WO 2025/048190

(57) **Abstract**

A washer pump module includes a heater assembly including a heater part that includes a plurality of heaters, a body part that accommodates the heater part, and a first housing that encompasses the heater part and the body part; and a connection assembly including a washer pump and a second housing that encompasses the washer pump; and a fixing assembly including a third housing that couples and fixes the heater assembly and the connection assembly, and a fluid level sensor that is coupled to and disposed in the third housing. The first housing includes a washer liquid inlet into which washer fluid flows in, and the body part includes a heating flow path for guiding the washer fluid, which flows in from the washer liquid inlet, to pass between the heaters and moves to the washer pump.

## Description

### CROSS-REFERENCE TO RELATED APPLICATIONS

This application is a Continuation of International Application No. PCT/KR2024/008783 filed June 25, 2024, which claims priority from Korean Application No. 10-2023-0112638 filed August 28, 2023. The aforementioned applications are incorporated herein by reference in their entireties.

### TECHNICAL FIELD

Embodiments of the present disclosure relate to a washer pump module.

### RELATED ART

In general, when it is difficult to secure a forward field of view during driving due to foreign substances such as dust on a vehicle windshield, a driver may maintain the cleanliness of the windshield by spraying washer fluid onto the windshield and simultaneously removing the foreign substances using windshield wipers.

Meanwhile, as various sensors are mounted on vehicles, contaminants may adhere to or accumulate on the sensors depending on road conditions such as snow or rain. In such cases, normal operation of the sensors may be adversely affected, and thus the need for means for sensor cleaning using washer fluid has emerged.

However, in regions where the ambient temperature can become below freezing or during winter, washer fluid stored in a cold state may not fully perform its intended function due to low temperatures. Moreover, when the temperature drops significantly, the washer fluid may freeze, turning to an unusable state.

To overcome this problem, a device for heating washer fluid is being provided in a reservoir tank that stores the washer fluid.

However, in the related art, functional components such as a fluid level sensor and a heater are mounted on the reservoir tank, while a motor pump is mounted separately and connected by wiring. As a result, wiring workability is poor. In addition, when malfunction occurs in one of these functional components, the reservoir tank itself must be removed, which degrades serviceability and increases maintenance costs.

### SUMMARY

To address the above-described problems, the present disclosure aims to provide a washer pump module with improved serviceability by modularizing functional components except for the reservoir tank, and with enhanced efficiency by applying a heating flow path for controlling the flow of washer fluid.

However, the above-described objectives are merely exemplary, and the scope of the present disclosure is not limited thereto.

According to one embodiment of the present disclosure, a washer pump module may include a heater assembly including a heater part including a plurality of heaters, a body part accommodating the heater part, and a first housing surrounding the heater part and the body part; a connector assembly including a washer pump and a second housing surrounding the washer pump; and a fixing assembly including a third housing configured to couple and fix the heater assembly and the connector assembly, and a fluid level sensor coupled to and disposed on the third housing. The first housing may include a washer fluid inlet through which washer fluid is introduced, and the body part may include a heating flow path that guides the washer fluid introduced through the washer fluid inlet to pass between the plurality of heaters and to flow toward the washer pump.

According to the above-described solutions, the washer pump module according to embodiments of the present disclosure improves serviceability by modularizing functional components excluding the reservoir tank.

In addition, the washer pump module according to embodiments of the present disclosure improves heating efficiency by allowing heat to be discharged from the housing of the heater assembly to surrounding washer fluid to initially raise the temperature of the washer fluid, and by applying the heating flow path that controls the flow of washer fluid introduced into the heater assembly.

### BRIEF DESCRIPTION OF THE DRAWINGS

FIG. 1 is a perspective view of a washer pump module according to one embodiment of the present disclosure.
FIG. 2 is a perspective view illustrating an internal structure of a housing of the washer pump module according to one embodiment of the present disclosure.
FIG. 3 is an exploded perspective view of the washer pump module of FIG. 2.
FIG. 4 is an exploded perspective view of a heater assembly according to one embodiment of the present disclosure.
FIG. 5 is a perspective view illustrating a body part of the heater assembly of FIG. 4.
FIG. 6 is a front view of the washer pump module according to one embodiment of the present disclosure.
FIG. 7 is a cross-sectional view taken along line A-A' of the washer pump module of FIG. 6.
FIG. 8 is a side cross-sectional view illustrating an example in which the washer pump module according to one embodiment of the present disclosure is applied to a reservoir tank.

### DETAILED DESCRIPTION

An embodiment of the present disclosure provides a washer pump module, which may include: a heater assembly including a heater part including a plurality of heaters, a body part accommodating the heater part, and a first housing surrounding the heater part and the body part; a connector assembly including a washer pump and a second housing surrounding the washer pump; and a fixing assembly including a third housing that couples and fixes the heater assembly and the connector assembly, and a fluid level sensor coupled to and disposed on the third housing. The first housing may include a washer fluid inlet through which washer fluid is introduced, and the body part may include a heating flow path that guides the washer fluid introduced through the washer fluid inlet to allow the washer fluid to pass between the plurality of heaters and flow to the washer pump.

In one embodiment, the body part may include heater accommodating portions for respectively accommodating the plurality of heaters on an outer surface of the body part, and the heater accommodating portions may be spaced apart from one another along the outer surface of the body part.

In one embodiment, the body part may include a hollow formed therein in a substantially longitudinal direction, and the heating flow path may be formed along the outer surface of the body part and may be connected to the hollow.

In one embodiment, the heating flow path may be formed in a groove shape having a predetermined depth from the outer surface of the body part along the longitudinal direction of the body part, and the heating flow path may be secured when the body part and the first housing are coupled such that an open portion of the groove is sealed.

In one embodiment, the first housing may include the washer fluid inlet at an end that is in contact with the fixing assembly, and the washer fluid drawn in through the washer fluid inlet may pass through the heating flow path. In one embodiment, the heating flow path may be formed in the longitudinal direction of the body part.

In one embodiment, the body part may be formed of a thermally conductive material.

In one embodiment, the first housing may be formed of a thermally conductive material.

In one embodiment, the fluid level sensor may be coupled to a sensor holder, which is coupled to one end of the third housing, and may be disposed on the heater assembly. In one embodiment, when the washer pump module is coupled to a reservoir tank, the fluid level sensor and the heater assembly may be configured to be disposed inside the reservoir tank and may be portions immersed in washer fluid.

In one embodiment, when the washer pump module is coupled to a reservoir tank, the connector assembly may be configured to be disposed outside the reservoir tank.

In one embodiment, the body part may further include a guide portion that guides an electrical terminal, which supplies electrical current to the heater part, and the guide portion may extend into the fixing assembly.

In one embodiment, the washer fluid inlet and the heating flow path may be formed at left, right, and lower sides of the heater assembly, and the fluid level sensor may be disposed at an upper side of the heater assembly.

In one embodiment, the washer fluid may flow in a first direction from the washer fluid inlet to the heating flow path and in a second direction from the heating flow path to the hollow.

In one embodiment, the hollow may include one or more guide portions that guide the washer fluid toward the washer pump.

Other aspects, features, and advantages than those described above will become apparent from the following drawings, claims, and detailed description of the disclosure.

Hereinafter, embodiments will be described in detail with reference to the accompanying drawings. When describing embodiments with reference to the drawings, identical or corresponding components are denoted by the same reference numerals, and redundant descriptions thereof will be omitted.

The embodiments may be subject to various modifications, and specific embodiments are illustrated in the drawings and will be described in detail. The effects and features of the embodiments, and methods for achieving the same, will become apparent with reference to the drawings and the detailed descriptions set forth below. However, the embodiments are not limited to those disclosed below and may be implemented in various forms.

In the drawings, portions irrelevant to the description are omitted for clarity of explanation, and similar portions are denoted by similar reference numerals throughout the specification.

In the following embodiments, singular expressions include plural expressions unless the context clearly indicates otherwise.

In the following embodiments, terms such as "include" or "have" indicate the presence of stated features or components, and do not preclude the possibility that one or more other features or components may be added.

In the following embodiments, when a unit, region, or component is described as being on or above another unit, region, or component, this includes not only cases where it is directly on the other unit, region, or component, but also cases where another unit, region, or component is interposed therebetween.

In the following embodiments, terms such as "connect" or "couple" do not necessarily mean direct and/or fixed connection or coupling between two members unless the context clearly indicates otherwise, and do not exclude the presence of another member interposed between the two members.

In the drawings, for convenience of explanation, the sizes of components may be exaggerated or reduced. For example, the sizes and thicknesses of components illustrated in the drawings are arbitrarily illustrated for convenience of explanation, and thus the embodiments are not limited to those illustrated.

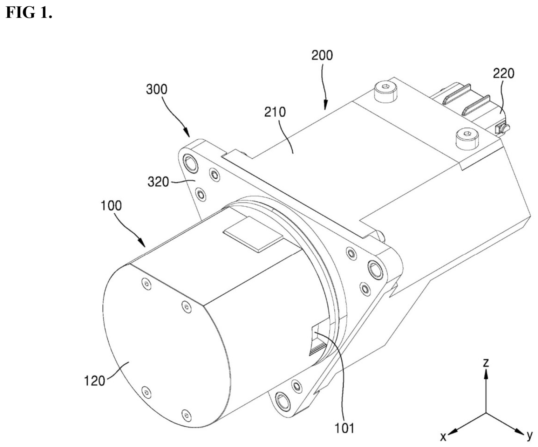

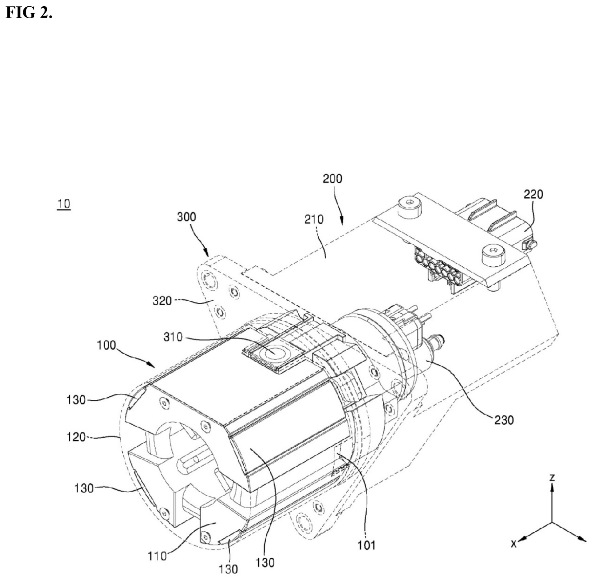

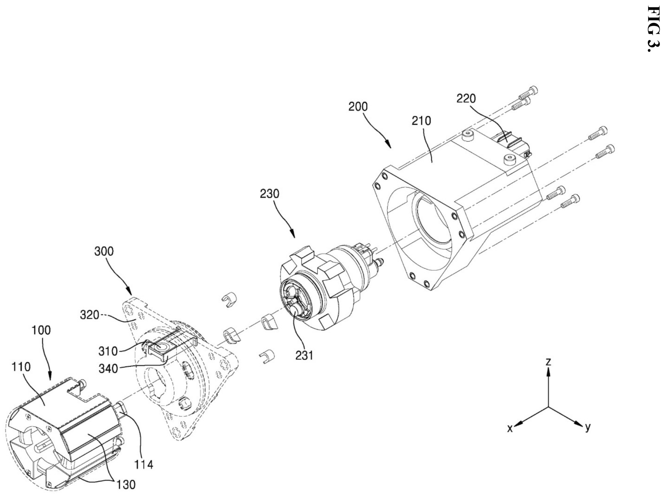

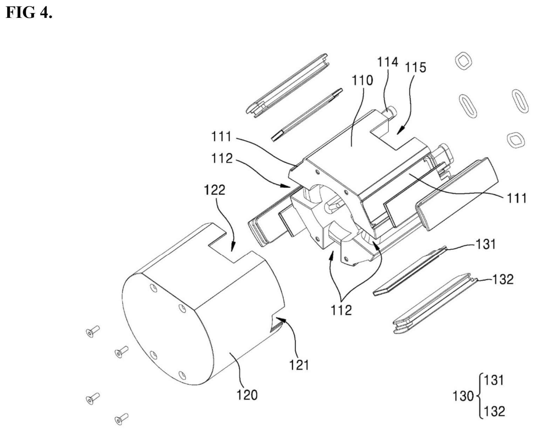

FIG. 1 is a perspective view of a washer pump module 10 according to one embodiment of the present disclosure, and FIG. 2 is a perspective view illustrating an internal structure of a housing of the washer pump module 10 according to one embodiment of the present disclosure. FIG. 3 is an exploded perspective view of the washer pump module 10 of FIG. 2, and FIG. 4 is an exploded perspective view of a heater assembly 100 according to one embodiment of the present disclosure.

Referring to FIGS. 1 to 3, the washer pump module 10 may include a heater assembly 100, a connector assembly 200, and a fixing assembly 300. Here, the heater assembly 100 may serve to heat washer fluid and supply the heated washer fluid to a washer pump 230. Specifically, the heater assembly 100 may include a heater part 130 including a plurality of heaters (e.g., heating elements), a body part 110 accommodating the heater part 130, and a first housing 120 surrounding the heater part 130 and the body part 110.

Referring to FIG. 4, in one embodiment, the heater part 130 may include a heater 131 and a heater cover 132. Here, the heater 131 may function as a heat source of the heater assembly 100 and may generate heat when electric current is applied thereto. In some embodiments, the heater 131 may be implemented as a positive temperature coefficient (PTC) heater, which is a thermistor having a characteristic in which resistance increases rapidly when a predetermined temperature is reached as the temperature rises. That is, the heater 131 may have a self-regulation function based on ambient temperature and heat dissipation conditions when an appropriate voltage is applied, and may thus maintain a constant temperature without a separate controller. The heating element material of the PTC heater may be a material having a basic composition of BaTiO₃ with La, Nb, Sr, Pb, or Mn added, or a Zn-Ti-Ni-O-based ceramic.

Meanwhile, the heater cover 132 may be coupled to the heater 131 and may further accommodate a heater O-ring. The heater O-ring may serve to block washer fluid from flowing into a heater accommodating portion 111.

In one embodiment, the body part 110 may accommodate the heater part 130 and may be coupled to the first housing 120. Specifically, heater accommodating portions 111 for respectively accommodating the plurality of heaters 131 may be formed on an outer surface of the body part 110, and may be spaced apart from one another along the outer surface of the body part 110. Here, the heater accommodating portions 111 may be formed substantially in a longitudinal direction (x direction) of the body part 110, and may be formed to have a predetermined depth from the outer surface of the body part 110 so as to accommodate all or at least a portion of the heater part 130.

In addition, the body part 110 may further include a guide portion 114 that guides electrical terminals that supplies electrical current to the heater 131. The guide portion 114 may extend from a side surface of the body part 110 adjacent to the heater accommodating portion 111 toward the fixing assembly 300. The guide portion 114 may be formed in a substantially tubular shape having a hollow interior, and the terminals may pass through the guide portion 114 and be connected to the heater 131.

Meanwhile, in one embodiment, a hollow 113 may be formed inside the body part 110 in the longitudinal direction (x direction). Accordingly, the body part 110 may be broadly divided into an outer portion and the hollow 113, which is a space formed therein. The hollow 113 may communicate with a pump inlet 231 of the washer pump 230, such that washer fluid passes through the hollow 113 and is then drawn into the pump inlet 231.

In the washer pump module 10, the body part 110 may include a heating flow path 112. The heating flow path 112 may guide washer fluid introduced through a washer fluid inlet 101 formed in the first housing 120 to pass through the heating flow path 112 formed between the heater parts 130 and move toward the washer pump 230.

Hereinafter, the structure and role of the heating flow path 112 will be described in detail.

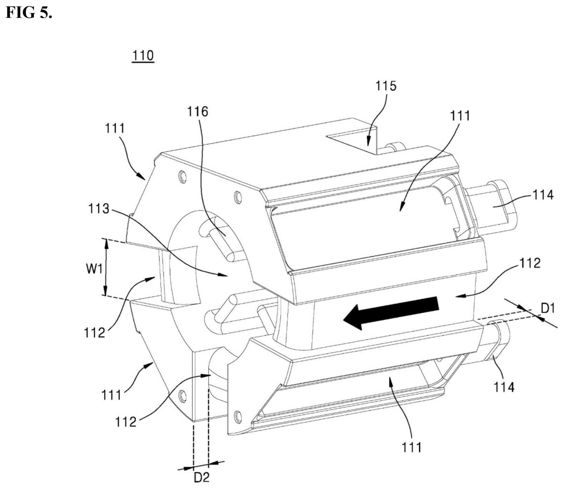

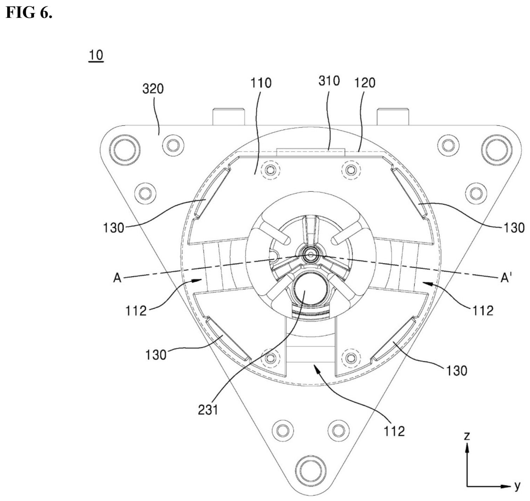

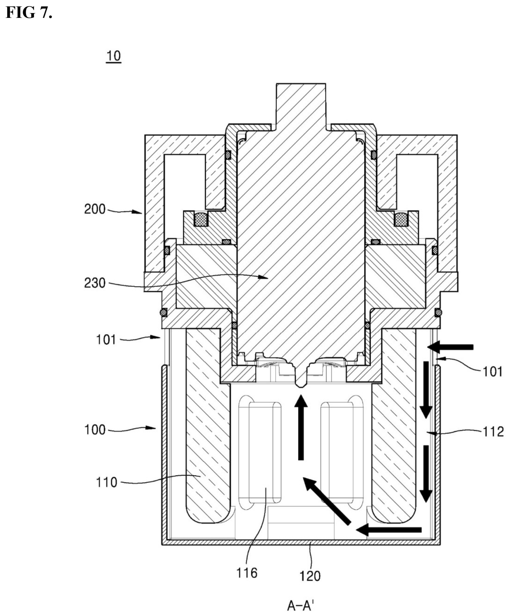

FIG. 5 is a perspective view illustrating the body part 110 of the heater assembly 100 of FIG. 4. FIG. 6 is a front view of the washer pump module 10 according to one embodiment of the present disclosure, and FIG. 7 is a cross-sectional view taken along line A-A' of the washer pump module 10 of FIG. 6.

Referring to FIGS. 5 to 7, in one embodiment, the heating flow path 112 may be formed along an outer surface of the body part 110 and may be connected to the hollow 113. The heating flow path 112 may be formed in a groove shape having a predetermined radial depth from the outer surface of the body part 110 and formed substantially along the longitudinal direction of the body part 110.

For example, the heating flow path 112 may have a predetermined depth D1 from the outer surface of the body part 110 and a narrow width W1 relative to the longitudinal direction. Further, defining a surface of the body part 110 that contacts the fixing assembly 300 as a rear surface and an opposite surface thereof as a front surface, the heating flow path 112 may be formed to have a predetermined depth D2 from the front surface of the body part 110 at a portion that contacts the front surface of the body part 110. That is, the heating flow path 112 may include the entire flow path that extends from a side surface of the body part 110 to the inside of the hollow 113.

Due to the above-described structure, washer fluid may flow in a direction indicated by the arrows illustrated in FIG. 7. Specifically, washer fluid introduced through the washer fluid inlet 101 may flow along the heating flow path 112 formed in the longitudinal direction on the side surface of the body part 110, then change direction at the front surface of the body part 110, make a U-turn toward the inside of the hollow 113, and flow toward the pump inlet 231.

In the washer pump module 10, since the heating flow path 112 is formed between a plurality of heater accommodating portions 111, washer fluid that flows along the heating flow path 112 may be gradually heated by the heat generated from the heater part 130.

In addition, when washer fluid flows while making a U-turn according to the above-described structure of the heating flow path 112, the washer fluid may stay around a heating element for a longer period of time than when passing the heating element only once. Accordingly, the washer pump module 10 may raise the temperature of the washer fluid more effectively.

In one embodiment, when the heating flow path 112 is formed in a groove shape having a predetermined depth from the outer surface of the body part 110 along the longitudinal direction of the body part 110, the heating flow path 112 may be secured as the body part 110 and the first housing 120 are coupled such that an open portion of the groove is sealed.

Referring again to FIG. 4, when the first housing 120 and the body part 110 are coupled, the groove formed on the outer surface of the body part 110 may be covered by the first housing 120 to form a tubular space, thereby securing the heating flow path 112.

Meanwhile, in one embodiment, the body part 110 may further include a guide portion 116 in the hollow 113. The guide portion 116 may be formed along the longitudinal direction of the body part 110 and may be implemented as a plate-shaped protrusion, which protrudes toward a central portion from an inner surface of the hollow 113. The guide portion 116 may be formed on the inner surface of the hollow 113 at a position facing the heating flow path 112 formed on the outer surface of the body part 110. The guide portion 116 may perform a function of guiding washer fluid introduced into the hollow 113 to flow in the longitudinal direction of the body part 110. The guide portion 116 may be provided in plurality.

In one embodiment, the body part 110 may be formed of a thermally conductive material. For example, the body part 110 may be formed of copper, silver, aluminum, or the like having a high thermal conductivity, such as materials typically used for heat sinks, or may be formed of an alloy thereof.

Accordingly, in the washer pump module 10, the heat released from the heater 131 may be more readily transferred to the body part 110 (e.g., via conduction), thereby improving efficiency in heating washer fluid that passes through the heating flow path 112 of the body part 110.

Referring again to FIG. 1, in one embodiment, the first housing 120 of the heater assembly 100 may be formed with a washer fluid inlet 101 through which external washer fluid is introduced. The washer fluid inlet 101 may be formed in a hole or groove shape, which penetrates an outer surface and an inner surface of the first housing 120 at a predetermined region. The predetermined region may correspond to a region 121 formed at an end of the first housing 120 and having one side open. For example, the first housing 120 may form the washer fluid inlet 101 at an end that is in contact with the fixing assembly 300, and the washer fluid drawn in through the washer fluid inlet 101 may pass through the heating flow path 112.

In addition, the first housing 120 may be coupled to the body part 110 and the heater cover 132, sealing the regions other than the washer fluid inlet 101. Accordingly, the first housing 120 may prevent separation of the heater cover 132 and may prevent leaking of washer fluid in regions other than the washer fluid inlet 101.

In one embodiment, the washer fluid inlet 101 may be formed at an end of the first housing 120, at a position corresponding to the heating flow path 112 of the body part 110. Accordingly, the washer fluid in the reservoir tank may be introduced into the heating flow path 112 through the washer fluid inlet 101.

In one embodiment, the first housing 120 may be formed of a thermally conductive material. For example, the first housing 120 may be formed of copper, silver, aluminum, or the like having a high thermal conductivity, such as materials typically used for heat sinks, or an alloy thereof. In some embodiments, the first housing 120 may be formed of the same material as the body part 110.

Accordingly, the first housing 120 may receive heat from the heater part 130 and the body part 110 disposed therein and may discharge the heat to the outside. That is, washer fluid in the reservoir tank adjacent to the heater assembly 100 may also receive the heat released from the first housing 120 and may be introduced into the washer fluid inlet 101 in a state where the temperature has been raised to some extent. Therefore, efficiency of the heater assembly 100 for raising the temperature of washer fluid may be further improved.

Referring again to FIGS. 1 to 3, in one embodiment, the connector assembly 200 may include the washer pump 230 and the second housing 210. The second housing 210 may function to accommodate wiring of respective components of the washer pump module 10 and may further include a connector 220. In addition, the second housing 210 may surround and protect the washer pump 230.

The washer pump 230 may serve to draw in washer fluid that has passed through the heater assembly 100 and discharge the washer fluid to the outside. In one embodiment, the washer pump 230 may be a brushless direct-current (BLDC) pump, but the present disclosure is not limited thereto.

The washer pump 230 may include a pump inlet 231, and the pump inlet 231 may be coupled so as to contact the hollow 113 of the heater assembly 100. Accordingly, the washer fluid that has passed through the hollow 113 may be introduced into the washer pump 230 through the pump inlet 231.

Referring again to FIGS. 1 to 3, in one embodiment, the fixing assembly 300 may include a third housing 320 and a fluid level sensor 310. The third housing 320 may couple and fix the heater assembly 100 and the connector assembly 200 and may serve as an intermediary. In addition, the third housing 320 may include a sensor holder 340 coupled to the fluid level sensor 310.

The fluid level sensor 310 may be coupled to the sensor holder 340 coupled to one end of the third housing 320 and may be disposed on the heater assembly 100. Specifically, the sensor holder 340 may be coupled to an upper portion of the third housing 320 and may be formed to protrude from the third housing 320 toward the heater assembly 100. Accordingly, to accommodate the protruding portion of the sensor holder 340, a first accommodating groove 115 may be formed at an end of the body part 110, and a second accommodating groove 122 may be formed at an end of the first housing 120. When the first housing 120 is coupled to the body part 110, the first accommodating groove 115 may overlap the second accommodating groove 122.

The fluid level sensor 310 may be implemented as a capacitive sensor or a pressure measurement sensor. The capacitive sensor may sense based on a principle of detecting a change in capacitance between electrodes mounted on the fluid level sensor 310, i.e., detects a change in capacitance generated between washer fluid and the fluid level sensor 310 to detect a remaining amount of washer fluid.

Also, the pressure measurement sensor may measure pressure or a change in pressure measured by the pressure measurement sensor by converting it into an electrical signal, and may measure the fluid level based on pressure that varies according to the fluid level in the reservoir tank.

Meanwhile, the sensor holder 340 may accommodate the fluid level sensor 310 and may be formed in a detachable structure to facilitate replacement.

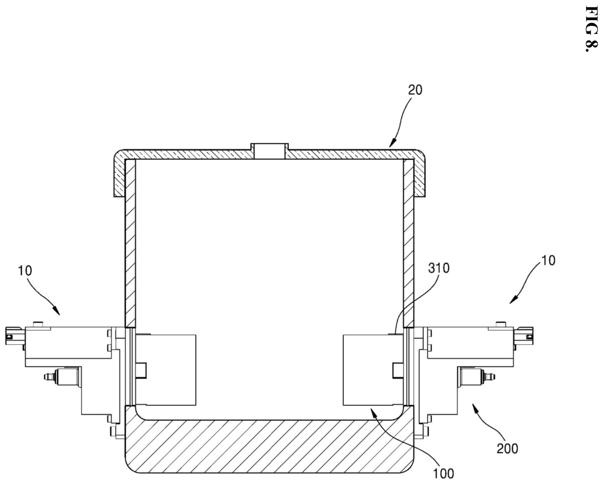

FIG. 8 is a side cross-sectional view illustrating an embodiment in which the washer pump module 10 is applied to a reservoir tank 20. Referring to FIG. 8, when the washer pump module 10 is coupled to the reservoir tank 20, the fluid level sensor 310 and the heater assembly 100 may be disposed inside the reservoir tank 20 and immersed in washer fluid. On the other hand, the connector assembly 200 may be disposed outside the reservoir tank 20.

In other words, with respect to the fixing assembly 300, the heater assembly 100 and the fluid level sensor 310 may be accommodated inside the reservoir tank 20 and may be immersed in washer fluid, whereas the fixing assembly 300 and the connector assembly 200 may be disposed outside the reservoir tank 20.

The washer pump module 10 may operate the heater 131 when it is determined, based on a vehicle ambient air temperature sensor or the like, that washer fluid is frozen, subject to a risk of freezing, or in a state where physical properties thereof are not suitable. Accordingly, physical properties of washer fluid inside the reservoir tank 20 may be restored, and the washer pump 230 may form pressure to deliver the washer fluid having restored physical properties from the reservoir tank 20 to a destination (e.g., a spray nozzle).

During the above-described process, the fluid level sensor 310 may continuously monitor the fluid level of washer fluid in the reservoir tank 20 and transmit information on the fluid level.

The washer pump module according to embodiments of the present disclosure may improve serviceability by modularizing functional components excluding the reservoir tank.

In addition, the washer pump module according to embodiments of the present disclosure may improve efficiency in heating washer fluid by allowing heat to be discharged from the housing of the heater assembly to surrounding washer fluid to primarily raise the temperature of the washer fluid, and by applying the heating flow path that controls flow of washer fluid introduced into the heater assembly.

Hereinabove, the present disclosure has been described with reference to exemplary embodiments. A person skilled in the art to which the present disclosure pertains will understand that the present disclosure may be implemented in modified forms without departing from the essential characteristics of the present disclosure. Therefore, the disclosed embodiments should be considered in a descriptive sense rather than a restrictive sense. The scope of the present disclosure is defined by the claims rather than the foregoing description, and all differences within the scope equivalent thereto should be construed as being included in the present disclosure.

The present disclosure relates to a washer pump module, and may be used for a washer pump module in which functional components other than a reservoir tank are modularized and a heating flow path is applied.

## Claims

1. A washer pump module comprising:
a heater assembly including a heater part including a plurality of heaters, a body part accommodating the heater part, and a first housing surrounding the heater part and the body part;
a connector assembly including a washer pump and a second housing surrounding the washer pump; and
a fixing assembly including a third housing that couples and fixes the heater assembly and the connector assembly, and a fluid level sensor coupled to and disposed on the third housing,
wherein the first housing includes a washer fluid inlet through which washer fluid is introduced, and
wherein the body part includes a heating flow path formed between the plurality of heaters to allow the washer fluid introduced through the washer fluid inlet to flow to the washer pump.

2. The washer pump module of claim 1, wherein the body part includes heater accommodating portions for respectively accommodating the plurality of heaters on an outer surface thereof, and
wherein the heater accommodating portions are spaced apart from one another along the outer surface of the body part.

3. The washer pump module of claim 1, wherein the body part includes a hollow therein in a substantially longitudinal direction, and
wherein the heating flow path is formed along an outer surface of the body part and is connected to the hollow.

4. The washer pump module of claim 3, wherein the washer fluid flows in a first direction from the washer fluid inlet to the heating flow path and in a second direction from the heating flow path to the hollow.

5. The washer pump module of claim 3, wherein the hollow includes a guide portion that guides the washer fluid toward the washer pump.

6. The washer pump module of claim 1, wherein the heating flow path is formed in a groove shape having a predetermined depth from an outer surface of the body part along a substantially longitudinal direction of the body part, and
wherein the heating flow path is secured when the body part and the first housing are coupled such that an open portion of the groove is sealed.

7. The washer pump module of claim 1, wherein the first housing includes the washer fluid inlet at an end that is in contact with the fixing assembly, and
wherein the washer fluid drawn in through the washer fluid inlet passes through the heating flow path.

8. The washer pump module of claim 7, wherein the heating flow path is formed in a substantially longitudinal direction of the body part.

9. The washer pump module of claim 7, wherein the washer fluid inlet and the heating flow path are formed at left, right, and lower sides of the heater assembly, and
wherein the fluid level sensor is disposed at an upper side of the heater assembly.

10. The washer pump module of claim 1, wherein the body part is formed of a thermally conductive material.

11. The washer pump module of claim 1, wherein the first housing is formed of a thermally conductive material.

12. The washer pump module of claim 1, wherein the fluid level sensor is coupled to a sensor holder, which is coupled to one end of the third housing, and is disposed on the heater assembly.

13. The washer pump module of claim 12, wherein, when the washer pump module is coupled to a reservoir tank, the fluid level sensor and the heater assembly are configured to be disposed inside the reservoir tank.

14. The washer pump module of claim 1, wherein, when the washer pump module is coupled to a reservoir tank, the connector assembly is configured to be disposed outside the reservoir tank.

15. The washer pump module of claim 1, wherein the body part further includes a guide portion that guides an electrical terminal for supplying electrical current to the heater part, and
wherein the guide portion extends into the fixing assembly.
